# EUROPÄISCHE PATENTSCHRIFT

(11) **EP 1 275 843 B1**
(45) Veröffentlichungstag und Bekanntmachung des Hinweises auf die Patenterteilung: **11.05.2005**
(21) Anmeldenummer: 02012032.5
(22) Anmeldetag: 31.05.2002
(51) Int. Cl.: F02M 59/44, F02M 25/06

(54) **Brennkraftmaschine, insbesondere für Kraftfahrzeuge**
Internal combustion engine for motor vehicle
Moteur à combustion interne pour véhicule automobile

(30) Priorität: 13.07.2001 DE 10134068
(43) Veröffentlichungstag der Anmeldung: 15.01.2003
(73) Patentinhaber: ROBERT BOSCH GMBH, 70442 Stuttgart (DE)
(72) Erfinder: Rembold, Helmut, 70435 Stuttgart (DE); Schaut, Edmund, 71292 Friolzheim (DE)

(56) Entgegenhaltungen:
- DE-A- 4 026 689
- DE-A- 19 627 757
- DE-A- 19 918 311
- US-A- 6 152 120

## Beschreibung

### Stand der Technik

Die Erfindung betrifft eine Brennkraftmaschine, insbesondere für Kraftfahrzeuge, mit einem Kraftstoffbehälter, mit mindestens einer Kraftstoffpumpe, mit mindestens einer Kraftstoff-Einspritzvorrichtung, über die der Kraftstoff in einen Brennraum der Brennkraftmaschine gelangen kann, und mit einer Leckageleitung, welche einerseits an einen Lufteinlass der Brennkraftmaschine und andererseits an die Kraftstoffpumpe angeschlossen ist.

Eine derartige Brennkraftmaschine ist aus der DE 196 27 757 A1 bekannt. Diese Brennkraftmaschine umfasst eine Kraftstoffpumpe, welche als Rotationskolbenpumpe ausgebildet ist. Der Kolben wird dabei von einer Exzenterwelle angetrieben. Die Exzenterwelle wird wiederum über einen Riemen von der Brennkraftmaschine angetrieben. Die Exzenterwelle ist über Kugellager drehbar gelagert. Die Kugellager werden von einem Schmiermittel geschmiert.

Damit sich der Kraftstoff, welcher von der Kraftstoffpumpe gefördert wird, möglichst wenig mit dem Schmiermittel der Kugellager der Exzenterwelle vermischt, ist bei der Kraftstoffpumpe der bekannten Brennkraftmaschine eine Einrichtung zur Abdichtung zwischen jenem Bereich der Kraftstoffpumpe vorgesehen, in dem Kraftstoff vorhanden ist, und jenem Bereich, in dem Schmiermittel vorhanden ist. Diese Einrichtung umfasst eine Leckageleitung, über die Leckagefluid aufgrund des in einem Saugrohr der Brennkraftmaschine vorhandenen Unterdrucks in dieses gesaugt wird.

Bei der bekannten Brennkraftmaschine wurde festgestellt, dass ihr Emissionsverhalten nicht immer optimal ist. Darüber hinaus wurden nach einiger Zeit Ablagerungen in den Brennräumen der Brennkraftmaschine festgestellt. Diese können zu einer Verschlechterung der Funktion bspw. der Ein- und Auslassventile führen.

Die vorliegende Erfindung hat daher die Aufgabe, eine Brennkraftmaschine der eingangs genannten Art so weiterzubilden, dass sie emissionsoptimiert arbeitet und über einen möglichst langen Zeitraum zuverlässig arbeiten kann.

Diese Aufgabe wird bei einer Brennkraftmaschine der eingangs genannten Art dadurch gelöst, dass die Leckageleitung mit einer Schmierstoff-Trenneinrichtung verbunden ist.

### Vorteile der Erfindung

Die erfindungsgemäße Brennkraftmaschine hat den Vorteil, dass bei ihr vermieden wird, dass es zu einem ungewollten Schmierstoff-Eintrag in den Brennraum der Brennkraftmaschine kommt. Dieser Schmierstoffeintrag verbrennt im Brennraum unter Erzeugung ungewollter Emissionsprodukte und führt zu den besagten Ablagerungen. Durch die erfindungsgemäß vorgesehene Schmierstoff-Trenneinrichtung wird der Schmierstoff aus dem von der Leckageleitung zum Lufteinlass geführten Fluid abgetrennt.

Somit gelangt über die Leckageleitung nur noch im Wesentlichen reiner Kraftstoff in den Lufteinlass - im Allgemeinen ein Saugrohr - der Brennkraftmaschine. Entsprechend wird das Emissionsverhalten der Brennkraftmaschine verbessert und es bilden sich weniger Ablagerungen im Brennraum der Brennkraftmaschine.

Vorteilhafte Weiterbildungen der Erfindung sind in den Unteransprüchen angegeben.

Umfasst die Schmierstoff-Trenneinrichtung einen Ölabscheider, hat dies den Vorteil, dass das üblicherweise zur Schmierung der Lager in der Kraftstoffpumpe verwendete Schmieröl sicher abgeschieden werden kann. Das abgeschiedene Schmieröl kann entweder an die entsprechenden Lagerstellen der Kraftstoffpumpe zurückgeführt oder in einen Auffangbehälter abgeführt werden, welcher bspw. bei einer ohnehin erforderlichen Wartung der Brennkraftmaschine geleert wird.

Ein Filter als Schmierstoff-Trenneinrichtung baut besonders einfach und ist relativ preiswert.

Besonders bevorzugt ist, wenn die Leckageleitung mit einer Entlüftungsleitung eines Kurbelgehäuses der Brennkraftmaschine verbunden und die Schmierstoff-Trenneinrichtung in der Entlüftungsleitung zwischen der Einmündung der Leckageleitung in die Entlüftungsleitung und dem Lufteinlass angeordnet ist. Eine solche Brennkraftmaschine baut relativ einfach, da eine derartige Entlüftungsleitung für das Kurbelgehäuse im Allgemeinen ohnehin vorhanden ist und die Schmierstoff-Trenneinrichtung in der Entlüftungsleitung nicht nur den von der Kraftstoffpumpe herkommenden Schmierstoff, sondern auch den aus dem Kurbelgehäuse stammenden Schmierstoff trennt. Hierdurch wird das Emissionsverhalten der Brennkraftmaschine nochmals verbessert. Eine solche gemeinsame Trenneinrichtung baut darüber hinaus kleiner und ist preiswerter als zwei getrennte Einrichtungen.

Ein zwischen der Kraftstoffpumpe und dem Lufteinlass, insbesondere in der Leckageleitung, angeordnetes Absperrventil hat den Vorteil, dass bei abgestellter Brennkraftmaschine das Abströmen von Kraftstoff aus der Kraftstoffpumpe über die Leckageleitung in den Lufteinlass unterbunden werden kann. Dies verbessert das Emissionsverhalten der Brennkraftmaschine beim Wiederanlassen und ermöglicht darüber hinaus das Druckhalten in Kraftstoffleitungen im Bereich der Kraftstoffpumpe auch bei abgestellter Brennkraftmaschine, wodurch die Dampfblasenbildung in diesem Bereich verhindert oder zumindest gemindert wird. Dies verbessert wiederum das Startverhalten der Brennkraftmaschine beim Heißstart.

Ein elektrisch betätigbares Absperrventil arbeitet dabei sehr präzise. Ist es stromlos geschlossen, ist auf einfache Art und Weise sichergestellt, dass bei abgestellter Brennkraftmaschine kein Kraftstoff über die Leckageleitung aus der Kraftstoffpumpe abströmen kann.

Dies gilt auch für ein hydraulisch betätigbares Absperrventil, welches drucklos geschlossen ist. Der Vorteil eines hydraulisch betätigbaren Absperrventils liegt in seinem einfacheren Aufbau, aufgrund der erforderlichen hydraulischen Steuerleitungen ist seine Installation jedoch aufwendiger als jene eines elektrischen Absperrventils.

Die Kraftstoffpumpe der Brennkraftmaschine kann einen Kolben, ein Führungsteil, in dem der Kolben axial beweglich geführt ist, einen Arbeitsraum, welcher von dem Kolben begrenzt wird, einen Niederdruckbereich und einen Hochdruckbereich, welche mit dem Arbeitsraum verbindbar sind, ein Antriebsmittel, welches den Kolben axial beaufschlagt, und mindestens einen Trennraum aufweisen, welcher zwischen dem Kolben und dem Führungsteil sich wenigstens bereichsweise in Umfangsrichtung erstreckt.

Insbesondere bei einer solchermaßen ausgestalteten Kolbenpumpe kommt es bei einer Hubbewegung des Kolbens zu einer Schleppströmung von Öl aus dem ölführenden Bereich in dem Trennraum. Bei einer entgegengesetzten Hubbewegung kommt es wiederum zu einer Schleppströmung von Kraftstoff aus dem kraftstoffführenden Bereich in den Trennraum. Das im Trennraum vorhandene Fluid ist somit sehr stark mit Schmiermittel durchmischt. Wenn der Trennraum an die Leckageleitung und somit auch an die Schmierstoff-Trenneinrichtung angeschlossen ist, wird trotz des hohen Schmierstoff-Anteils des abgeführten Fluids sichergestellt, dass in den Lufteinlass letztlich im Wesentlichen nur Kraftstoff gelangt.

Eine einfache Ausgestaltung des Trennraums ist dadurch gegeben, dass er durch mindestens eine Ringnut am Führungsteil gebildet ist. Alternativ hierzu ist es auch möglich, die Ringnut am Kolben zu bilden.

Der Trennraum wird vorteilhafterweise axial gegenüber dem Führungsteil so angeordnet, dass zwei Führungsabschnitte am Führungteil zu beiden Seiten des Trennraums vorhanden sind, in denen der Kolben geführt ist. Der Führungsabschnitt zum schmierstoffführenden Bereich der Kraftstoffpumpe kann dabei ggf. sogar größer sein, da hierdurch der Kolben geschmiert und seine Gleitreibung gegenüber dem Führungsteil verringert wird, was insgesamt den Wirkungsgrad der Kolbenpumpe verbessert. Ferner wird aufgrund des längeren Weges, welchen der Schmierstoff vom schmierstoffführenden Bereich zum Trennraum zurücklegen muss, der Eintrag von Schmierstoff in den Trennraum und von dort in die Leckageleitung verringert.

Auch eine zwischen dem Trennraum und dem Antriebsmittel vorgesehene Ringdichtung führt zu einer Verringerung des Schmierstoffeintrags in den Trennraum.

Vorteilhaft ist auch, wenn der Kolben der Kraftstoffpumpe zwei axiale Abschnitte mit unterschiedlichen Durchmessern aufweist und ein Entlastungskanal vorhanden ist, welcher vom Übergangsbereich zwischen den beiden Abschnitten zum Niederdruckbereich führt. Dies bewirkt eine Verringerung der Druckschwankungen im Niederdruckbereich, was wiederum die dort vorhandenen Komponenten entlastet.

### Zeichnung

Nachfolgend wird ein besonders bevorzugtes Ausführungsbeispiel der Erfindung unter Bezugnahme auf die beiliegende Zeichnung im Detail erläutert. In der Zeichnung zeigen:
- Figur 1: eine Prinzipskizze einer Brennkraftmaschine mit einer Kraftstoffpumpe; und
- Figur 2: eine teilweise geschnittene Darstellung der Kraftstoffpumpe von Figur 1.

### Beschreibung des Ausführungsbeispiels

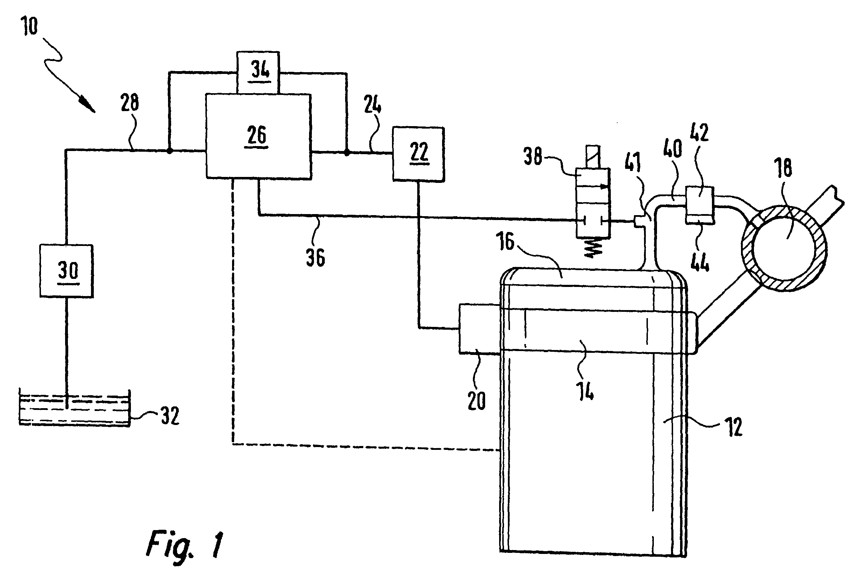

Eine Brennkraftmaschine trägt in Fig. 1 insgesamt das Bezugszeichen 10. Die Brennkraftmaschine 10 umfasst wiederum einen Motorblock 12 mit einem Zylinderkopf 14 und einem Ventildeckel 16. Im Motorblock 12 ist ein nicht sichtbares Kurbelgehäuse vorhanden.

Im Motorblock 12 sind mehrere Brennräume (nicht sichtbar) vorhanden. Diesen wird die Verbrennungsluft über ein Saugrohr 18 zugeführt. Kraftstoff wird in die Brennräume im Motorblock 12 direkt über am Zylinderkopf 14 befestigte Injektoren 20 eingespritzt. Die Injektoren 20 sind wiederum an eine Kraftstoff-Sammelleitung 22 angeschlossen, welche gemeinhin auch als "Rail" bezeichnet wird. Die Kraftstoff-Sammelleitung 22 wird über eine Kraftstoffleitung 24 von einer von der Kurbelwelle der Brennkraftmaschine 10 angetriebenen Hochdruck-Kraftstoffpumpe 26 gespeist. Dieser wird der Kraftstoff wiederum über eine Kraftstoffleitung 28 von einer elektrischen Kraftstoffpumpe 30 zugeführt. Diese saugt aus einem Kraftstoffbehälter 32 an.

Die von der Hochdruck-Kraftstoffpumpe 26 in die Kraftstoff-Sammelleitung 22 geförderte Kraftstoffmenge wird über ein Mengensteuerventil 34 eingestellt. Von der Hochdruck-Kraftstoffpumpe 26 führt eine Leckageleitung 36 zu einem elektromagnetisch betätigten Absperrventil 38 und von dort weiter zu einer Entlüftungsleitung 40. Das Absperrventil 38 ist stromlos geschlossen. Die Entlüftungsleitung 40 führt aus dem Kurbelgehäuse über den Ventildeckel 16 zum Saugrohr 18. Die Einmündung der Leckageleitung 36 in die Entlüftungsleitung 40 trägt das Bezugszeichen 41.

In der Entlüftungsleitung 40 ist zwischen der Einmündung 41 der Leckageleitung 36 und dem Saugrohr 18 eine Schmierstoff-Trenneinrichtung 42 vorhanden. Bei dieser handelt es sich im vorliegenden Ausführungsbeispiel um einen Ölabscheider. Möglich ist aber auch die Ausbildung der Schmierstoff-Trenneinrichtung 42 als Filter. An der Unterseite des Ölabscheiders 42 ist ein Sammelbehälter 44 befestigt. Dieser dient zum Auffangen des vom Ölabscheider 42 abgeschiedenen Schmierstoffs.

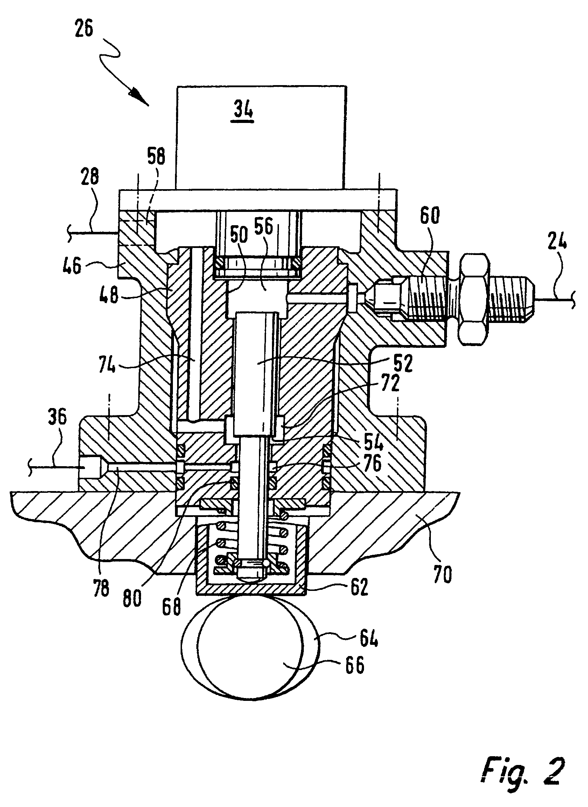

Der genaue Aufbau der Hochdruck-Kraftstoffpumpe 26 ist aus Fig. 2 ersichtlich: In einem Gehäuse 46 der Hochdruck-Kraftstoffpumpe 26 ist ein zylindrisches Führungsteil 48 durch eine Verbördelung gehalten. In dem Führungsteil 48 ist eine Durchgangsbohrung 50 vorhanden, in der ein Kolben 52 axial beweglich geführt ist. Der Kolben 52 weist zwei axiale Abschnitte (ohne Bezugszeichen) auf, welche unterschiedliche Durchmesser aufweisen. Zwischen den beiden Abschnitten ist eine Stufe 54 vorhanden.

Das Gehäuse 46 wird in Fig. 2 nach oben hin durch das Mengensteuerventil 34 abgeschlossen. Durch das Mengensteuerventil 34, das Führungsteil 48 und die in Fig. 2 obere Stirnseite des Kolbens 52 wird ein Arbeitsraum 56 begrenzt. Dieser ist mit einem in Fig. 2 nur gestrichelt dargestellten, da außerhalb der Schnittebene liegenden, Niederdruckbereich 58 verbunden.

Zwischen dem Niederdruckbereich 58 und dem Arbeitsraum 56 ist ein in Fig. 2 ebenfalls nicht sichtbares Rückschlagventil vorgesehen. Über ein in Fig. 2 ebenfalls nicht dargestelltes Rückschlagventil ist der Arbeitsraum 56 ferner mit einem Hochdruckbereich 60 verbunden. Der Hochdruckbereich 60 ist an die Kraftstoffleitung 24, der Niederdruckbereich 58 der Hochdruck-Kraftstoffpumpe 26 an die Kraftstoffleitung 28 angeschlossen.

Der Kolben wird über einen Tassenstößel 62 von einem Antriebsnocken 64 angetrieben. Dies bedeutet, dass eine Drehung einer Welle 66 und hierdurch des mit der Welle 66 verbundenen Antriebsnockens 64 der Kolben 52 in axialer Richtung beaufschlagt wird. Der Kolben 52 wird dabei mit dem Tassenstößel 62 durch eine Druckfeder 68 gegen den Antriebsnocken 64 gedrückt. Die Antriebswelle 66 der Hochdruck-Kolbenpumpe 26 ist über in Fig. 2 nicht dargestellte Kugellager reibungsarm drehbar gelagert. Sie ist zusammen mit den Kugellagern in einem Gehäuse 70 angeordnet, welches mit dem Gehäuse 46 fest verbunden ist.

Die Schmierung der Kugellager sowie der Kontaktfläche zwischen Antriebsnocken 64 und Tassenstößel 62 erfolgt über Schmieröl (in Fig. 2 nicht dargestellt).

Die Durchgangsbohrung 50 im Führungsteil 48 ist stufenförmig ausgeführt. Auf jener Höhe, in welcher sich die Stufe 54 des Kolbens 52 befindet, ist zwischen der Durchgangsbohrung 50 und dem Kolben 52 ein Ringraum 72 vorhanden. Dieser ist über einen Entlastungskanal 74 mit dem Niederdruckbereich 58 verbunden. Oberhalb und unterhalb des Ringraums 72 bildet die Bohrung 50 des Führungsteils 48 Führungsabschnitte, in denen der Kolben 52 gleitend geführt ist.

Unterhalb des Ringraums 72 ist in die Wand der Durchgangsbohrung 50 eine Ringnut 76 eingebracht. Durch diese wird zwischen dem Führungsteil 48 und dem Kolben 52 ein Trennraum gebildet. Der Trennraum 76 ist wiederum über einen Leckagekanal 78 mit der Leckageleitung 36 verbunden. In Fig. 2 unterhalb des Trennraums 76 ist in der Wand der Durchgangsbohrung 50 eine weitere Ringnut vorhanden, in welche eine Einlippendichtung 80 eingesetzt ist.

Die Hochdruck-Kraftstoffpumpe 26 arbeitet folgendermaßen: Bei einer Drehung der Antriebswelle 66 und des Antriebsnockens 64 wird der Kolben 52 in eine axiale Hin- und Herbewegung versetzt. Hierdurch wird abwechselnd der Arbeitsraum 56 mit Kraftstoff gefüllt und der Kraftstoff vom Kolben 52 anschließend aus dem Arbeitsraum 56 in den Hochdruckbereich 60 gedrückt.

Der Kolben 52 wird dabei über einen relativ großen Teil seiner axialen Erstreckung direkt vom Führungsteil 48 geführt. Die Spalte zwischen dem Kolben 52 und dem Führungsteil 48 sind dabei so bemessen, dass möglichst wenig Kraftstoff vom Arbeitsraum 56 zum Ringraum 72 und weiter zum Trennraum 76 gelangt. Auf die gleiche Weise wird auch verhindert, dass eine übermäßige Menge an Schmierstoff aus dem Gehäuse 70 zum Trennraum 76 gelangt. Dies wird zusätzlich noch durch die Einlippendichtung 80 unterstützt.

Aufgrund der Hubbewegung des Kolbens 52 und den damit verbundenen Schleppströmungen kann jedoch ein Eintrag von Kraftstoff aus dem Arbeitsraum 56 einerseits und von Schmierstoff aus dem Gehäuse 70 andererseits in den Trennraum 76 nicht ganz verhindert werden. Durch den Trennraum 76 wird es allerdings weitgehend unmöglich gemacht, dass Schmierstoff weiter über den Ringraum 72 bis in den Arbeitsraum 56 gelangt. Auch wird durch den Trennraum 76 ein Eintrag von Kraftstoff zum Gehäuse 70 hin weitgehend vermieden.

Im normalen Betrieb der Brennkraftmaschine 10 ist das Absperrventil 38 bestromt und somit geöffnet. Somit besteht eine direkte Verbindung vom Trennraum 76 über den Leckagekanal 78, die Leckageleitung 36, und die Entlüftungsleitung 40 zum Saugrohr 18 hin. Da im Saugrohr 18 im normalen Betrieb der Brennkraftmaschine ein Unterdruck herrscht, wird einerseits der Kraftstoff und andererseits der Schmierstoff aus dem Trennraum 76 in Richtung zur Entlüftungsleitung 40 abgesaugt.

Dies erzeugt die oben beschriebene Dichtwirkung einerseits zwischen dem Bereich, in dem Kraftstoff vorhanden ist, und jenem Bereich, in dem Schmierstoff vorhanden ist. Das Schmierstoff-Kraftstoffgemisch gelangt bis zum Ölabscheider 42. Dort wird der Schmierstoff in den Auffangbehälter 44 abgeschieden. Der Kraftstoff gelangt weiter in das Saugrohr 18 und von dort in die Brennräume der Brennkraftmaschine 10.

Bei abgestellter Brennkraftmaschine 10 ist das Absperrventil 38 stromlos und somit die Verbindung zwischen Trennraum 76 und Saugrohr 18 unterbrochen. Hierdurch wird vermieden, dass nach dem Abstellen der Brennkraftmaschine 10 Kraftstoff aus dem sich entspannenden Niederdruckbereich 58 der Hochdruck-Kraftstoffpumpe 26 in den Trennraum 76 und von dort über das Saugrohr 18 in die Brennräume gelangt. In gleicher Weise wird in diesem Fall durch die Einlippendichtung 18 verhindert, dass Kraftstoff in das Gehäuse 70 strömt und das dort vorhandene Schmiermittel verdünnt.

## Patentansprüche

1. Brennkraftmaschine (10), insbesondere für Kraftfahrzeuge, mit einem Kraftstoffbehälter (32), mit mindestens einer Kraftstoffpumpe (26), mit mindestens einer Kraftstoff-Einspritzvorrichtung (20), über die der Kraftstoff in einen Brennraum der Brennkraftmaschine (10) gelangen kann, und mit einer Leckageleitung (36), welche einerseits an einen Lufteinlass (18) der Brennkraftmaschine (10) und andererseits an die Kraftstoffpumpe (26) angeschlossen ist, **dadurch gekennzeichnet, dass** die Leckageleitung (36) mit einer Schmierstoff-Trenneinrichtung (42) verbunden ist.

2. Brennkraftmaschine (10) nach Anspruch 1, **dadurch gekennzeichnet, dass** die Schmierstoff-Trenneinrichtung einen Ölabscheider (42) umfasst.

3. Brennkraftmaschine (10) nach einem der Ansprüche 1 oder 2, **dadurch gekennzeichnet, dass** die Schmierstoff-Trenneinrichtung einen Filter umfasst.

4. Brennkraftmaschine (10) nach einem der vorhergehenden Ansprüche, **dadurch gekennzeichnet, dass** die Leckageleitung (36) mit einer Entlüftungsleitung (40) eines Kurbelgehäuses der Brennkraftmaschine (10) verbunden und die Schmierstoff-Trenneinrichtung (42) in der Entlüftungsleitung (40) zwischen der Einmündung der Leckageleitung (36) in die Entlüftungsleitung (40) und dem Lufteinlass (18) angeordnet ist.

5. Brennkraftmaschine (10) nach einem der vorhergehenden Ansprüche, **dadurch gekennzeichnet, dass** zwischen der Kraftstoffpumpe (26) und dem Lufteinlass (18), insbesondere in der Leckageleitung (36), ein Absperrventil (38) angeordnet ist.

6. Brennkraftmaschine (10) nach Anspruch 5, **dadurch gekennzeichnet, dass** das Absperrventil (38) elektrisch betätigbar und stromlos geschlossen ist.

7. Brennkraftmaschine nach Anspruch 5, **dadurch gekennzeichnet, dass** das Absperrventil hydraulisch betätigbar und drucklos geschlossen ist.

8. Brennkraftmaschine (10) nach einem der vorhergehenden Ansprüche, **dadurch gekennzeichnet, dass** die Kraftstoffpumpe (26) einen Kolben (52), ein Führungsteil (48), in dem der Kolben (52) axial beweglich geführt ist, einen Arbeitsraum (56), welcher von dem Kolben (52) begrenzt wird, einen Niederdruckbereich (58) und einen Hochdruckbereich (60), welche mit dem Arbeitsraum (56) verbindbar sind, ein Antriebsmittel (64), welches den Kolben (52) axial beaufschlagt, und mindestens einen Trennraum (76) aufweist, welcher zwischen dem Kolben (52) und dem Führungsteil (48) sich wenigstens bereichsweise in Umfangsrichtung erstreckt und welcher mit der Leckageleitung (36) verbunden ist.

9. Brennkraftmaschine (10) nach Anspruch 8, **dadurch gekennzeichnet, dass** der Trennraum (76) durch mindestens eine Ringnut am Führungsteil (48) gebildet ist.

10. Brennkraftmaschine nach einem der Ansprüche 8 oder 9, **dadurch gekennzeichnet, dass** der Trennraum durch mindestens eine Ringnut am Kolben gebildet ist.

11. Brennkraftmaschine (10) nach einem der Ansprüche 8 bis 10, **dadurch gekennzeichnet, dass** der Trennraum (76) axial gegenüber dem Führungsteil (48) so angeordnet ist, dass zwei Führungsabschnitte am Führungsteil (48) zu beiden Seiten des Trennraums (76) vorhanden sind, in denen der Kolben (52) geführt ist.

12. Brennkraftmaschine (10) nach einem der Ansprüche 8 bis 11, **dadurch gekennzeichnet, dass** zwischen dem Trennraum (76) und dem Antriebsmittel (64) eine sich in Umfangsrichtung um den Kolben (52) herum erstreckende Ringdichtung, insbesondere eine Einlippendichtung (80), angeordnet ist.

13. Brennkraftmaschine (10) nach einem der Ansprüche 8 bis 12, **dadurch gekennzeichnet, dass** der Kolben (52) der Kraftstoffpumpe (26) zwei axiale Abschnitte mit unterschiedlichen Durchmessern aufweist und ein Entlastungskanal (74) vorhanden ist, welcher vom Übergangsbereich (72) zwischen den beiden Abschnitten zum Niederdruckbereich (58) führt.

## Claims

1. Internal combustion engine (10), in particular for motor vehicles, with a fuel tank (32), with at least one fuel pump (26), with at least one fuel injection device (20), via which the fuel can pass into a combustion space of the internal combustion engine (10), and with a leakage line (36) which is connected, on the one hand, to an air inlet (18) of the internal combustion engine (10) and, on the other hand, to the fuel pump (26), **characterized in that** the leakage line (36) is connected to a lubricant separation device (42).

2. Internal combustion engine (10) according to Claim 1, **characterized in that** the lubricant separation device comprises an oil separator (42).

3. Internal combustion engine (10) according to either one of Claims 1 and 2, **characterized in that** the lubricant separation device comprises a filter.

4. Internal combustion engine (10) according to one of the preceding claims, **characterized in that** the leakage line (36) is connected to a venting line (40) of a crankcase of the internal combustion engine (10), and the lubricant separation device (42) is arranged in the venting line (40) between the issue of the leakage line (36) into the venting line (40) and the air inlet (18).

5. Internal combustion engine (10) according to one of the preceding claims, **characterized in that** a shut-off valve (38) is arranged between the fuel pump (26) and the air inlet (18), in particular in the leakage line (36).

6. Internal combustion engine (10) according to Claim 5, **characterized in that** the shut-off valve (38) can be actuated electrically and is closed when currentless.

7. Internal combustion engine according to Claim 5, **characterized in that** the shut-off valve can be actuated hydraulically and is closed when pressureless.

8. Internal combustion engine (10) according to one of the preceding claims, **characterized in that** the fuel pump (26) has a piston (52), a guide part (48) in which the piston (52) is guided axially movably, a working space (56) which is delimited by the piston (52), a low-pressure region (58) and a high-pressure region (60) which are connectable to the working space (56), a drive means (64) which acts axially upon the piston (52), and at least one separation space (76) which extends between the piston (52) and the guide part (48), at least in regions, in the circumferential direction, and which is connected to the leakage line (36).

9. Internal combustion engine (10) according to Claim 8, **characterized in that** the separation space (76) is formed by at least one annular groove on the guide part (48).

10. Internal combustion engine according to either one of Claims 8 and 9, **characterized in that** the separation space is formed by at least one annular groove on the piston.

11. Internal combustion engine (10) according to one of Claims 8 to 10, **characterized in that** the separation space (76) is arranged axially with respect to the guide part (48), in such a way that two guide portions, in which the piston (52) is guided, are present on the guide part (48) on both sides of the separation space (76).

12. Internal combustion engine (10) according to one of Claims 8 to 11, **characterized in that** an annular seal, in particular a single-lip seal (80), extending around the piston (52) in the circumferential direction is arranged between the separation space (76) and the drive means (64).

13. Internal combustion engine (10) according to one of Claims 8 to 12, **characterized in that** the piston (52) of the fuel pump (26) has two axial portions with different diameters, and a relief duct (74) is present which leads from the transitional region (72) between the two portions to the low-pressure region (58).

## Revendications

1. Moteur à combustion interne (10), notamment pour un véhicule automobile, comportant un réservoir à carburant (32), au moins une pompe à carburant (26), au moins un dispositif d'injection de carburant (20) qui alimente en carburant une chambre de combustion du moteur à combustion interne (10) et une conduite de fuite (36) raccordée d'un côté à une entrée d'air (18) du moteur à combustion interne (10) et d'autre part à la pompe à carburant (26),
**caractérisé en ce que**
la conduite de fuite (36) est reliée à une installation de séparation de lubrifiant (42).

2. Moteur à combustion interne (10) selon la revendication 1,
**caractérisé en ce que**
l'installation de séparation de lubrifiant est un séparateur d'huile (42).

3. Moteur à combustion interne (10) selon l'une des revendications 1 ou 2,
**caractérisé en ce que**
l'installation de séparation de lubrifiant comprend un filtre.

4. Moteur à combustion interne (10) selon l'une des revendications précédentes,
**caractérisé en ce que**
la conduite de fuite (36) est reliée à la conduite de ventilation (40) du carter de vilebrequin du moteur à combustion interne (10) et l'installation de séparation de lubrifiant (42) est montée dans la conduite de ventilation (40) entre l'embouchure de la conduite de fuite (36) dans la conduite de ventilation (40) et l'entrée d'air (18).

5. Moteur à combustion interne (10) selon l'une des revendications précédentes,
**caractérisé par**
une vanne d'arrêt (38) installée entre la pompe à carburant (26) et l'entrée d'air (18), notamment dans la conduite de fuite (36).

6. Moteur à combustion interne (10) selon la revendication 5,
**caractérisé en ce que**
la vanne d'arrêt (38) est à commande électrique et cette vanne est fermée lorsque le courant est coupé.

7. Moteur à combustion interne selon la revendication 5,
**caractérisé en ce que**
la vanne d'arrêt est à commande hydraulique et elle est fermée en l'absence de pression.

8. Moteur à combustion interne (10) selon l'une des revendications précédentes,
**caractérisé en ce que**
la pompe à carburant (26) comporte un piston (52), une pièce de guidage (48) guidant axialement le piston (52), une chambre de travail (56) délimitée par le piston (52), une zone basse pression (58) et une zone haute pression (60) qui peuvent être reliées à la chambre de travail (56), un agent d'entraînement (64) qui sollicite axialement le piston (52) et au moins une chambre de séparation (76) entre le piston (52) et la pièce de guidage (48), au moins en partie dans la direction périphérique et cette chambre est reliée à la conduite de fuite (36).

9. Moteur à combustion interne (10) selon la revendication 8,
**caractérisé en ce que**
la chambre de séparation (76) est formée par au moins une rainure annulaire dans la pièce de guidage (48).

10. Moteur à combustion interne selon l'une des revendications 8 ou 9,
**caractérisé en ce que**
la chambre de séparation est formée par au moins une rainure annulaire du piston.

11. Moteur à combustion interne (10) selon l'une des revendications 8 à 10,
**caractérisé en ce que**
la chambre de séparation (76) est installée axialement par rapport à la pièce de guidage (48) pour que deux segments de guidage de la pièce de guidage (48) existent sur deux côtés de la chambre de séparation (76) dans lesquels est guidé le piston (52).

12. Moteur à combustion interne (10) selon l'une des revendications 8 à 11,
**caractérisé par**
un joint annulaire entourant le piston (52) dans la direction périphérique entre la chambre de séparation (76) et le moyen d'entraînement (64), ce joint étant notamment un joint à une lèvre (80).

13. Moteur à combustion interne (10) selon l'une des revendications 8 à 12,
**caractérisé en ce que**
le piston (52) de la pompe à carburant (26) comporte deux segments axiaux à diamètres différents et un canal de décharge (74) relie la zone transitoire (72) entre les deux segments et la zone basse pression (58).
